# EUROPÄISCHE PATENTSCHRIFT

(11) **EP 1 291 120 B1**
(45) Veröffentlichungstag und Bekanntmachung des Hinweises auf die Patenterteilung: **07.01.2009**
(21) Anmeldenummer: 01121462.4
(22) Anmeldetag: 07.09.2001
(51) Int. Cl.: B23K 37/053

(54) **Spannvorrichtung zum Ausrichten und Spannen von zwei Rohrenden**
Fastening device to align and fasten two pipe ends
Dispositif de serrage pour aligner et serrer deux extrémités de tubes

(43) Veröffentlichungstag der Anmeldung: 12.03.2003
(73) Patentinhaber: Schnorrer, Walter, 9200 Aalborg SV (DK)
(72) Erfinder: Schnorrer, Walter, 9200 Aalborg SV (DK)
(74) Vertreter: Glawe, Delfs, Moll

(56) Entgegenhaltungen:
- DE-U- 9 005 893
- US-A- 5 398 862
- US-A- 5 538 173

## Beschreibung

Die Erfindung betrifft eine Spannvorrichtung zum Ausrichten und Spannen von zwei Rohrenden mit Spanntellern, die axial beabstandet angeordnet sind, sich in axialer Richtung erstreckenden Spannkeilen, die an einer ersten Seite in Radial-Richtung beweglich an den Spanntellern gelagert sind und an einer zweiten Seite eine Kontaktfläche zum Einwirken auf die Rohrenden aufweisen, einer Führung zum Führen der Spannkeile an den Spanntellern und einer Betätigungseinrichtung zum Bewegen der Spannkeile. Die Erfindung erstreckt sich ferner auf einen Spannvorrichtungs-Satz mit mehreren Sätzen von auswechselbaren Spannkeilen, die unterschiedliche Abstände von der inneren zur äußeren Seite aufweisen.

Zum Verschweißen von Rohren ist es erforderlich, daß die aneinandergrenzenden Enden der zu verschweißenden Rohre in bestimmter Weise zueinander ausgerichtet sind und in dieser Stellung gehalten werden. Eine häufig vorhandene Ovalität der Rohre soll so gut wie möglich dabei beseitigt werden. Um das Ausrichten und Festhalten der Rohrenden in der gewünschten Stellung zu erleichtern, gibt es grundsätzlich zwei verschiedene Möglichkeiten. Die eine Möglichkeit ist, Spannvorrichtungen zu verwenden, die innen oder außen an den miteinander zu verschweißenden Rohrenden angebracht werden und durch bewegte Spannelemente an den Rohrenden festgeklemmt werden. Von solchen Spannvorrichtungen sind unterschiedliche Ausführungen bekannt, die entweder jeweils nur ein Rohrende spannen, so daß zwei Spannvorrichtungen erforderlich sind, oder die beide Rohrenden spannen.

Letzteres wird z. B. durch eine Vorrichtung gemäß der Patentschrift US 5 538 173 erreicht, bei der an Spanntellern anliegende Spannkeile die beiden Rohrenden fixieren können, indem die Spannteller in Bezug auf die Spannkeile verschoben werden und sich der Durchmesser der Vorrichtung dabei vergrößert.

Die zweite, noch häufig verwendete Möglichkeit ist, die Rohrenden nach dem Ausrichten nicht durch eine besondere Spannvorrichtung in der gewünschten Position zu halten, sondern die beiden Rohrenden durch eine gewissen Anzahl von Schweißpunkten miteinander zu verheften und somit in Ihrer gegenseitigen Ausrichtung zu fixieren. Diese weitgehend in Handarbeit ausgeführte Möglichkeit findet vor allem dann Anwendung, wenn die Rohrenden mit besonders hoher Genauigkeit miteinander verschweißt werden sollen, und dies auch noch unter ungünstigen Bedingungen geschieht, wie beispielsweise im Off-Shore-Bereich. Nachteilig hieran ist, daß die Qualität sehr schwankend ist. Häufig werden nur schlechte Schweißergebnisse erreicht. Spannwerkzeug mit Spanntellern und Spannkeilen sind ferner aus dem Bereich der Metallverarbeitung bekannt. Solche Spannwerkzeuge werden beispielsweise bei Fräsen zur Bearbeitung von Rohren verwendet. Die Fräse wird mittels des an einem Rohrende eingeschobenen Spannwerkzeugs im Rohr verankert. Ähnliche Spannwerkzeuge sind auch bei Drehbänken bekannt. Ihnen ist gemeinsam, daß sie nur zum Spannen von einem Rohrende ausgelegt sind, und nicht zum Spannen und gegenseitigen Ausrichten von zwei Rohrenden, wie es beim Verschweißen von zwei Rohrenden erforderlich ist.

Nachteilig an den bekannten Spannvorrichtungen ist, daß sie ein Ausrichten und Spannen nicht mit der erforderlichen Genauigkeit zu leisten vermögen. Das manuelle Ausrichten und Spannen der Rohrenden durch geschweißte Verheftungen ist zeit- und kostenaufwendig, insbesondere unter widrigen Umgebungsbedingungen.

Der Erfindung liegt die Aufgabe zugrunde, eine Spannvorrichtung der eingangs genannten Art zu schaffen, die ein einfacheres und genaueres Spannen von zwei Rohrenden ermöglicht.

Die erfindungsgemäße Lösung liegt in einer spann vorrichtung mit den Merkmalen des Anspruchs 1 sowie einem Spann-vorrichtungs-Satz mit den Merkmalen des Anspruchs 18. Vorteilhafte Weiterbildungen ergeben sich aus den Unteransprüchen.

Zunächst einmal seien einige verwendete Begriffe erläutert:

Unter einer Spannvorrichtung wird eine Vorrichtung verstanden, die zum gegenseitigen Ausrichten und Halten von zwei Rohrenden mit oder ohne dazugehörigen Fittings bzw. Formteilen in Position dient. In der Regel ist dabei die Vorrichtung dafür ausgelegt, die Rohrenden koaxial zueinander auszurichten; es können aber auch andere Ausrichtungsarten denkbar sein, z.B. mit einem bestimmten Winkelversatz der jeweiligen Mittelachse der beiden Rohre.

Unter Spanntellern werden im wesentlichen scheiben- oder ringförmige Elemente verstanden, die zur Lagerung und zur Führung der Spannkeile dienen. Bei einer Spannvorrichtung, die zum Spannen an einer Rohrinnenfläche ausgebildet ist, sind die Spannteller so ausgebildet, daß sie in die Rohrenden eingeführt werden können; bei einer Spannvorrichtung, die zum Spannen an einer Rohraußenoberfläche ausgebildet ist, sind die Spannteller so ausgebildet, daß sie über die Rohrenden gesteckt werden können. Der Spannteller weist zwar üblicherweise eine rundliche Gestalt auf, kann aber auch abhängig von der Form der miteinander zu verschweißenden Rohrenden eine andere Gestaltung aufweisen. So kann er beispielsweise bei Spannvorrichtungen zum Verschweißen von Vierkantrohren rechteckig oder quadratisch ausgebildet sein.

Unter einer elastischen Halteeinrichtung wird eine Einrichtung verstanden, die mindestens ein elastisches Element aufweist, das Kräfte auf ein anderes Bauelement ausüben kann. Bei dem elastischen Element kann es sich um ein solches Element handelt, daß seine Elastizität im wesentlichen aus seiner Formgebung bezieht, wie beispielsweise eine Spiralfeder, oder sie aus seinen Materialeigenschaften bezieht, wie beispielsweise Gummi.

Erfindungsgemäß ist also vorgesehen, bei einer Spannvorrichtung der eingangs genannten Art die Führung mit einer elastischen Halteeinrichtung zum Halten der Spannkeile an den Spanntellern zu versehen. Die Führung ist in Form von Führungsnuten gestaltet, deren Nutgrund eine Schrägfläche bildet. Nuten ermöglichen eine besonders einfache und zweckmäßige Art der Führung von den Spannkeilen an den Spanntellern. Die Schrägfläche, die zweckmäßigerweise mit einer Gegenschrägfläche an dem geführten Element, in der Regel den Spannkeilen, zusammenwirkt, bestimmt die Relation der Bewegung zwischen den Spanntellern und den Spannkeilen. Sie erlaubt es, daß durch Verändern des axialen Abstands der Spannteller die Spannkeile in radialer Richtung bewegt werden. Ihr Winkel bestimmt über das Verhältnis dieser beiden Bewegungen und der Kraftübersetzung zwischen der Kraft, die zum Bewegen der Spannteller aufeinander zu oder voneinander weg aufgebracht wird und der Spreizkraft der Keilplatten.

Durch die elastische Halteeinrichtung wird erreicht, daß mit der erfindungsgemäßen Spannvorrichtung die miteinander zu verschweißenden Rohrenden auch dann mit der erforderlichen Genauigkeit und Sicherheit gespannt werden können, wenn die Spannvorrichtung an den Rohrenden nicht exakt ausgerichtet ist, sondern eine Fehlstellung einnimmt, beispielsweise leicht verkippt angeordnet ist. Das elastische Halteelement gibt den Spannkeilen innerhalb der Führung eine gewissen Beweglichkeit gegenüber den Spanntellern, so daß sich die Spannkeile trotz der Fehlstellung der Spannvorrichtung sicher an die Rohrenden anlegen und diese sich schließlich ausrichten und spannen lassen. Dank ihrer Elastizität ist die Halteeinrichtung zwar bestrebt, die Spannkeile in ihrer Normallage gegenüber den Spanntellern zu halten, erlaubt es jedoch ggf. den Spannkeilen eine gegenüber der Normallage abweichende Position einzunehmen, um so Fehler, die aus einer verkippten Anordnung der Spannvorrichtung in den Rohrenden oder aus anderen Ungenauigkeiten resultieren auszugleichen. Ein weiterer Vorteil der erfindungsgemäßen elastischen Halteeinrichtung ist, daß sie eine verliersichernde Wirkung aufweist. Die verliersichernde Wirkung beruht darauf, daß die elastische Halteeinrichtung bestrebt ist, die Spannkeile in ihrer Normallage zu den Spanntellern zu halten. Sie wirkt damit unerwünschten Bewegungen der Spannkeile gegenüber den Spanntellern entgegen und hält damit die Spannkeile an den Spanntellern.

Überraschend ist, daß mit der erfindungsgemäßen elastischen Halteeinrichtung einerseits den Spannkeilen ein gewisser Freiheitsgrad gegenüber den Spanntellern zum Ausgleich von Ausrichtungsfehlern, wie beispielsweise Verkippungen, gegeben werden kann, ohne daß sich dadurch die Sicherheit und Genauigkeit der Führung der Spannkeile an den Spanntellern verschlechtert.

Vorzugsweise umfaßt die elastische Halteeinrichtung eine federbelastete Kugel, die an einem der beiden, dem Spannteller oder den Spannteilen angeordnet ist, um mit dem anderen der beiden, den Spannkeilen oder dem Spannteller zusammenwirkt. Die von einer Feder mit Kraft beaufschlagte Kugel übt eine Haltekraft aus, durch die die Spannkeile an den Spanntellern gehalten werden. Diese Kraft ist zweckmäßigerweise so bemessen, daß sie einerseits hoch genug ist, um die Spannkeile an den Spanntellern zu halten, andererseits aber bei dem Auftreten höherer Kräfte, wie sie beim Spannen der Spannvorrichtung in verkippter Position auftreten, überwunden werden und somit eine Bewegung der Spannkeile aus ihrer Normallage heraus erlauben.

Häufig wird es so sein, daß die federbelastete Kugel an den Spanntellern angeordnet ist und auf eine Oberfläche der Spannkeile einwirkt; es kann aber auch umgekehrt vorgesehen sein, daß die federbelastete Kugel an den Spannkeilen angeordnet ist und auf eine Oberfläche des Spantellers einwirkt.

Zweckmäßigerweise umfaßt die elastische Halteeinrichtung eine Vertiefung, die an dem anderen der beiden, den Spannkeilen oder dem Spannteller, angeordnet ist, und mit der federbelasteten Kugel zusammenwirkt. Die Vertiefung bildet zusammen mit der federbelasteten Kugel einen Formschluß, der ein sichereres Halten der Spannkeile an den Spanntellern als durch Reibungskräfte allein ermöglicht. Darüber hinaus kann durch die Form der Vertiefung ein Bewegungspfad für die Führung der Spannkeile an den Spanntellern vorgegeben sein. Besonders vorteilhaft ist es, die Vertiefung als Rinne auszuführen. Die Spannkeile können dann entlang dieser Bewegungsbahn (Normallage) ohne bedeutende Gegenkraft durch die elastische Halteeinrichtung geführt werden.

Zweckmäßigerweise ist als Lager für die federbelastete Kugel eine Hohlschraube vorgesehen. Die Hohlschraube ermöglicht eine besonders einfache Lagerung der Kugel sowie der die Kugel mit Kraft beaufschlagenden Feder. Außerdem ermöglicht die Hohlschraube ein einfaches Verstellen der Vorspannung der Feder und damit der Haltekraft der federbelasteten Kugel.

Zweckmäßigerweise ist im Bereich der Führungsnuten eine Tangentialbohrung zur Aufnahme der federbelasteten Kugel vorgesehen, die mit ihrem einen Ende in der Führungsnut und mit ihrem anderen Ende an der Umfangsfläche der Spannteller endet. Mit einer solchen Tangentialbohrung wird eine besonders raumsparende und einfach herzustellende Aufnahme für die federbelastete Kugel und ggf. die Hohlschraube gebildet. Durch Ändern der Position der Hohlschraube in der Bohrung, beispielsweise durch Verdrehen kann auf einfache Weise eine Änderung der Federvorspannung und damit der von der Kugel ausgeübten Haltekraft vorgenommen werden.

Vorzugsweise bestehen die Spannkeile aus einer Kupfer-Chrom-Nickel-Legierung. Diese Legierung weist günstige Reibeigenschaften auf, so daß keine Schmierung zwischen den Spanntellern und den Spannkeilen erforderlich ist. Dadurch vereinfacht sich der Aufbau der erfindungsgemäßen Spannvorrichtung erheblich; auch im Betrieb ergeben sich dadurch beträchtliche Erleichterungen. Sie können aber auch aus anderen Materialien insbesondere Edelstahl, Titan, Bronze und Legierungen bestehen.

Zweckmäßigerweise sind an äußeren Stirnflächen der Spannteller Dichteinrichtungen angeordnet, die zum dichtenden Zusammenwirken mit Oberflächen der Rohrenden ausgebildet sind. Durch diese Dichteinrichtungen ist der zwischen ihnen befindliche Raum mit der Spannvorrichtung gasdicht von dem übrigen Rohrinneren abgetrennt. Dadurch wird der Zutritt von schädlichen Gasen, beispielsweise Luftsauerstoff, aus dem Rohrinneren an die Verschweißungsstelle zwischen den beiden Rohrenden vermieden. Dadurch ist ein besseres Schweißergebnis erzielbar.

Vorzugsweise ist mindestens an einem der Spannteller eine Formiergasführung vorgesehen, um zugeführtes Formiergas in den Bereich zwischen die Spannteller zu leiten. Das Formiergas dient zur weiteren Verbesserung der Umgebungsbedingungen an der Schweißstelle, insbesondere zur Schaffung einer Schutzgasatmosphäre. Die in die Spannteller integrierten Formiergasführungen erlauben ein besonders einfaches, zuverlässiges und verlustarmes Zuführen von Formiergas.

Zweckmäßigerweise ist eine Anschlußplatte mit einem Anschluß und einer Durchgangsöffnung für das zuzuführende Formiergas vorgesehen, die über einen Ringkanal mit der Formiergasführung des Spanntellers in Verbindung steht. Mit der gesonderten Anschlußplatte ist ein besonders einfacher und universeller Anschluß für das Formiergas möglich. Dank des Ringkanals kann die Anschlußplatte in einer beliebigen Winkelposition in bezug auf den Spannteller liegen, so daß es möglich ist, die Anschlußplatte auch im Betrieb der Spannvorrichtung gegenüber dem Spannteller zu verdrehen. Außerdem hat der Ringkanal den Vorteil, daß mit nur einem Anschluß an der Anschlußplatte eine Mehrzahl von Formiergasführungen in dem Spannteller mit Formiergas versorgt werden können, sofern die Formiergasführungen auf einer Kreisbahn angeordnet sind.

Zweckmäßigerweise ist mindestens eine Entlüftungsöffnung an einem der Spannteller, vorzugsweise dem ohne Formiergasführung, vorgesehen. Durch die Entlüftungsöffnung kann überschüssiges Formiergas aus dem Raum zwischen den beiden Dichteinrichtungen abgeführt werden. Dadurch wird vermieden, daß infolge des zugeführten Formiergases ein unerwünschter Überdruck in dem Raum zwischen den Dichteinrichtungen und damit an der Schweißstelle entsteht.

Zweckmäßigerweise ist die Betätigungseinrichtung zum Bewegen der Spannkeile als Zugspindel ausgebildet. Alternativ kann sie auch hydraulisch ausgeführt sein. Die Betätigungseinrichtung braucht nicht auf die Spannkeile direkt zu wirken. Bei einer bewährten Ausführungsform wirkt sie vielmehr auf die Spannteller, deren Bewegung über die Führung dann auf die Spannkeile übertragen wird.

Gemäß einer besonders bevorzugten Ausführungsform der Erfindung, die ggf. auch unabhängigen Schutz genießen soll, ist ein aus mindestens zwei Segmenten bestehender Spreizring vorgesehen, dessen äußere Umfangsfläche einen umlaufenden Drucksattel aufweist. In einem solchen Spreizring kann die Rohroberfläche in dem Bereich, in dem die Schweißnaht angebracht werden soll, ein wenig eingedrückt werden, um somit das Rohr in diesem Bereich der späteren Schweißnaht ein wenig zu weiten. Das Erweitern des Rohres in diesem Bereich hat den Vorteil, daß die volle Weite des Rohres auch dann erhalten bleibt, wenn sich nach vollendetem Schweißen das Rohr insbesondere im Bereich der Schweißnaht wieder zusammenzieht. Ohne eine vorher durchgenommene Erweiterung kann es nämlich passieren, daß dann in diesem Bereich die Weite des Rohres eingeengt ist; ist jedoch mit dem Spreizring vor dem eigentlichen Schweißvorgang eine Erweiterung des Rohres in diesem Bereich vorgenommen worden, so weist das Rohr auch nach dem Schweißen im Bereich der Schweißnaht die volle Weite auf. Ein weiterer überraschender Vorteil der Aufweitung besteht darin, daß dadurch gerade in dem kritischen Bereich der Schweißstelle eine evtl. Ovalität der Rohrenden vermindert werden kann. Dabei kann die Ausweitung verhältnismäßig gering sein, je nach Rohrdicke ist ein Betrag von etwa 0,1 - 0,4 mm vollkommen ausreichend. Es kann aber auch um einen größeren Betrag aufgeweitet werden, bis zu 1,5 mm können sogar mit einer mechanischen Betätigungseinrichtung ohne Schwierigkeiten erreicht werden. Der Spreizring kann so ausgebildet sein, daß er entweder auf den Spannkeilen aufsetzbar ist, oder unter Entfall der Spannkeile unmittelbar zwischen die Spannteller montiert ist, die dann nur einen verhältnismäßig geringen Abstand voneinander aufweisen. Durch Aktivieren der Betätigungseinrichtung bewegen sich die Spannteller aufeinander zu, wodurch die Segmente des Spreizrings mittelbar über die Spannkeile oder unmittelbar in radialer Richtung gegen die Rohroberfläche gedrängt werden, um diese aufzuweiten. Da die Aufweitung lediglich in dem unmittelbaren Bereich der Schweißnaht erforderlich ist, um die für die Aufweitung erforderlichen Kräfte gering zu halten, weist der Drucksattel eine nur verhältnismäßig geringe Erstreckung von wenigen mm, vorzugsweise etwa 4 - 8 mm, in axialer Richtung auf.

Zweckmäßigerweise weist der Spreizring an seiner inneren Umfangsfläche Abschrägungen auf. Mit diesen Abschrägungen ist es möglich, daß der Spreizring unmittelbar zwischen den Spanntellern angeordnet ist und diese mit dem Spreizring unmittelbar, das heißt ohne dazwischen angeordnete Spannkeile, zusammenwirken. Zweckmäßigerweise weisen die Spannteller an ihrer jeweiligen zum Zusammenwirken mit den Spannkeilen bestimmten Kante eine Anfasung auf, deren Winkel vorzugsweise mit dem der Abschrägung übereinstimmt. Durch diese Anfasung wird eine besonders gute Anlage der Spannteller an dem Spreizring erreicht. Die Anfasung erstreckt sich dabei über einen kleineren Bereich als die Tiefe der die Spannkeile aufnehmenden Schlitze, damit zwischen den Schlitzen ausreichend Material an dem Spannteller zur sicheren Führung der Spannkeile verbleibt. Durch die Abschrägung an der inneren Umgebungsfläche des Spreizrings und der Anfasung an dem Spannteller mit dem gleichen Winkel wird in vorteilhafterweise erreicht, daß die Spannteller mit dem Spreizring ein eigenständiges, von den Spannkeilen unabhängiges System bilden. So kann der Winkel der Abschrägung bzw. der Anfasung unabhängig von dem Winkel der Schrägfläche in der Führungsnut gewählt werden, so daß eine andere Kraftübersetzung zwischen der axial auf der Spannvorrichtung einwirkenden Kraft der Betätigungseinrichtung und der sich daraus ergebenden radial wirkenden Presskraft einerseits und der Spannkraft andererseits ergibt. Vorzugsweise ist der Winkel der Abschrägung bzw. Anfasung kleiner als derjenige der Schrägfläche der Führungsnuten, damit eine möglichst hohe Kraftübersetzung erzielt wird. Das hat den Vorteil, das mit unveränderter Betätigungseinrichtung hohe Spreizkräfte erzeugt werden können, um so auch Rohre mit verhältnismäßig hoher Wandstärke erweitern zu können.

Die Erfindung bezieht sich ferner auf einen Spannvorrichtungs-Satz zum Ausrichten und Spannen von Rohrenden in verschiedenen Größen, mit Spanntellern, die axial beabstandet angeordnet sind, sich in axialer Richtung erstreckenden Spannkeilen, die an einer ersten Seite in Radial-Richtung beweglich an den Spanntellern gelagert sind und an einer zweiten Seite eine Kontaktfläche zum Einwirken auf die Rohrenden aufweisen, einer Führung zum Führen der Spannkeile an den Spanntellern und einer Betätigungseinrichtung zum Bewegen der Spannkeile, dadurch gekennzeichnet, daß die Führung (4) zum Führen der Spannkeile (2) an den Spanntellern (1) in Form von Führungsnuten (12) ausgebildet ist, wobei der Nutgrund (16) der Führungsnuten (12) eine Schrägfläche bildet und daß die Führung mit einer elastischen Halteeinrichtung zum Halten der Spannkeile an den Spanntellern versehen ist, wobei die Spannkeile auswechselbar sind und mehrere Sätze von Spannkeilen vorgesehen sind, die unterschiedliche Abstände von der inneren zur äußeren Seite aufweisen. Außerdem können sie aus unterschiedlichem Material bestehen.

Dadurch, daß die Spannkeile auswechselbar sind, und mehrere Sätze von Spannkeilen vorhanden sind, die sich in ihren Abmessungen unterscheiden, kann eine Anpassung der Spannvorrichtung an die jeweiligen Abmessungen der miteinander zu verschweißenden Rohrenden vorgenommen werden. Sind zwei Rohrenden mit einem kleinen Durchmesser miteinander zu verschweißen, so wird aus den Sätzen von Spannkeilen ein solcher Satz von Spannkeilen ausgewählt und in die Spannvorrichtung eingesetzt, der einen passenden kleinen Abstand von der spanntellerseitigen ersten Seite bis zur rohrseitigen zweiten Seite aufweist. Soll ein Paar Rohrenden mit einem größeren Durchmesser miteinander verschweißt werden, so wird ein solcher Satz von Spannkeilen ausgewählt und eingesetzt, der entsprechend größere Abmessungen aufweist. Dadurch ergibt sich eine großer Einsatzbereich der erfindungsgemäßen Spannvorrichtung hinsichtlich der verschweißbaren Rohrgrößen. Durch einfaches Auswechseln des Satzes von Spannkeilen kann eine Anpassung an unterschiedliche Rohrdurchmesser erfolgen.

Zweckmäßigerweise sind die Spannkeile mehrteilig mit einem spanntellerseitigen Gleitstück und einem rohrseitigen Aufsatzstück ausgeführt, wobei das Aufsatzstück auswechselbar ist und ein Satz von Aufsatzstücken unterschiedlicher Größe vorgesehen ist. Wie sich gezeigt hat, ist es nicht unbedingt erforderlich, Spannkeile als Ganzes auszuwechseln, sondern es kann genügen, den Teil des Spannkeils auszuwechseln, der für den Abstand von der spanntellerseitigen Kante bis zur rohrseitigen Kante bestimmend ist. Das hat den Vorteil, daß beim Auswechseln die Spannkeile nicht aus ihren Führungen an den Spanntellern herausgenommen werden und die neuen darin wiedereingesetzt zu werden brauchen. Es genügt, ein anderes Aufsatzstück auf das in den Führungen an den Spanntellern verbleibende Gleitstück aufzusetzen. Zweckmäßigerweise ist ein Schnellverschluß für die Verbindung der Aufsatzstücke an den Gleitstücken vorgesehen.

Die Erfindung wird nachfolgend unter Bezugnahme auf die beigefügte Zeichnung erläutert, in der vorteilhafte Ausführungsbeispiel der vorliegenden Erfindung dargestellt ist. Es zeigen:

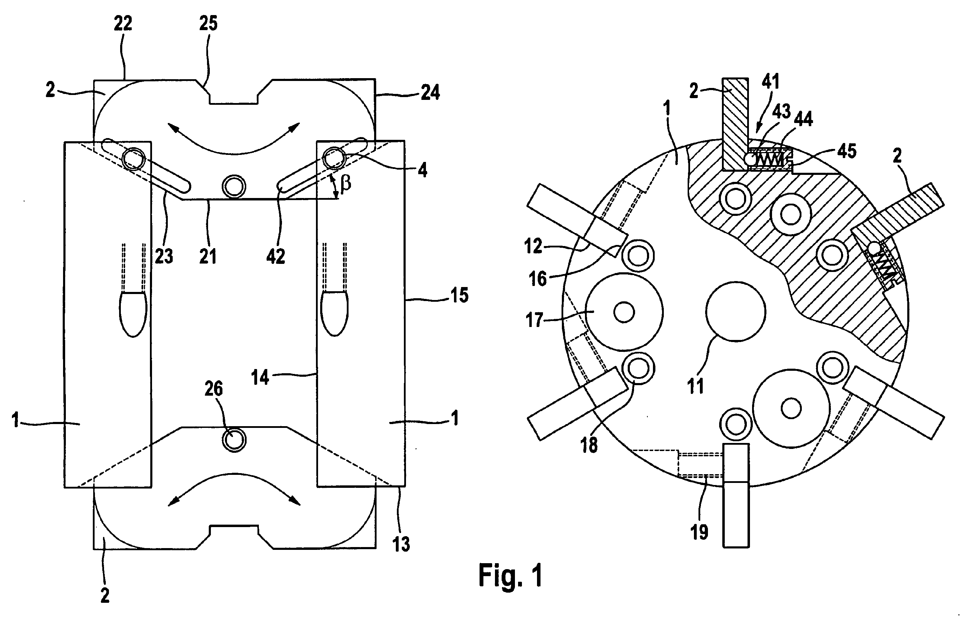

- Fig. 1: Eine Seitenansicht und eine Aufsicht teilweise im Schnitt eines Ausführungsbeispiels der vorliegenden Erfindung;
- Fig. 2: eine Schnittansicht einer in ein Rohrpaar eingesetzten Spannvorrichtung gemäß dem Ausführungsbeispiel der Erfindung;
- Fig. 3: eine Schnittansicht der erfindungsgemäßen Spannvorrichtung in einer Normallage in einem Rohrpaar;
- Fig. 4: eine Schnittansicht der Spannvorrichtung gemäß der vorliegenden Erfindung in einer Fehlstellung in einem Rohrpaar;
- Fig. 5: eine Darstellung eines Satzes von Spannkeilen;
- Fig. 6: eine Darstellung eines weiteren Spannkeilsatzes mit auswechselbaren Spannschuh;
- Fig. 7: eine Darstellung eines Spreizrings; und
- Fig. 8: eine Schnittansicht des Spreizrings im montierten Zustand.

Eine erfindungsgemäße Spannvorrichtung umfaßt in dem dargestellten Ausführungsbeispiel zwei Spannteller 1, einen Satz von sechs Spannkeilen 2 sowie eine Betätigungseinrichtung 3. Es kann auch eine andere Zahl von Spannkeilen 2 vorgesehen sein, vorzugsweise zwischen drei und zwanzig in Abhängigkeit vom Rohrinnendurchmesser. Die Spannteller 1 sind entlang einer gemeinsamen, von der Betätigungseinrichtung 3 gebildeten Achse mit axialem Abstand voneinander angeordnet. Jeder der beiden Spannteller 1 weist eine zu dem jeweils anderen Spannteller 1 weisende innere Stirnseite 14 sowie eine davon nach außen wegweisende äußere Stirnseite 15 auf.

An Umfangsflächen 13 der Spannteller 1 sind eine Mehrzahl von Nuten 12 angeordnet, die bei dem dargestellten Ausführungsbeispiel gleichmäßig in einem Winkelabstand von 60° angeordnet sind. Die Nuten 12 erstrecken sich über einen Teil der Umfangsfläche 13 und sowie über einen Teil der inneren Stirnfläche 14 derart, daß ihr Nutgrund 16 nicht parallel zu der gemeinsamen Achse der Spannscheiben 1 ausgerichtet, sondern in radialer Richtung um einen Winkel β konusartig geschrägt ist. Die Spannteller (1) weisen ferner in ihrer Mitte jeweils eine Zentrumsbohrung 11 zur Aufnahme der Betätigungseinrichtung 3 auf. Hinter den beiden Spanntellern 1 sind ferner eine Mehrzahl von (im dargestellten Ausführungsbeispiel sechs) Bohrungen 18 für Flanschschrauben vorgesehen. Ferner sind in einer der beiden Spannteller 1 eine Mehrzahl von (im dargestellten Ausführungsbeispiel drei) Gasdurchführungen 17 vorgesehen.

Zwischen den beiden Spanntellern 1 sind brückenartig die Spannkeile 2 angeordnet. Die Spannkeile 2 sind von einer etwa trapezartigen Form mit einer kürzeren inneren Kante 21 und einer längeren äußeren Kante 22. An den beiden Enden der inneren Kante 21 schließt sich jeweils eine Schrägkante 23 an, die schließlich über jeweils eine Stirnkante 24 zur äußeren Kante 22 führt. Die Schrägkante 23 ist um den selben Winkel β gegenüber der inneren Kante 21 geneigt, mit der der schrägen Nutgrund 16 gegenüber der Achsrichtung geneigt ist. In der Mitte der äußeren Kante 22 ist eine Aussparung 25 etwa in dem Bereich vorgesehen, in dem beim Einsatz der Spannvorrichtung die Enden der von der Spannvorrichtung gespannten Rohre miteinander verschweißt werden. Gegenüberliegend ist etwa in der Mitte der inneren Kante 21 eine Aufnahmeöffnung 26 für eine Spannfeder 20 vorgesehen.

Im montierten Zustand der Spannvorrichtung sind die Spannkeile 2 mit ihrer Schrägkante 23 in die Nuten 12 der Spannteller 1 eingesetzt. Dabei liegen die Schrägkanten 23 auf dem Nutgrund 16 der Nuten 12 dank der bei beiden gleich großen Schrägung um den Winkel β im wesentlichen flächig auf. Mit dieser Anordnung wird erreicht, daß bei einem verhältnismäßig großen axialen Abstand zwischen den beiden Spanntellern 1 die Spannkeile 2 mit ihren jeweiligen äußeren Bereichen der Schrägkanten 23 auf dem Nutgrund 16 der Spannteller 1 aufliegen, so daß die äußeren Kanten 22 der Spannkeile 2 nur um eine geringe Distanz über die Umfangsfläche 13 der Spannteller 1 herausragen; andererseits liegen bei einem verhältnismäßig geringen axialen Abstand der Spannteller 1 zueinander die Spannkeile 2 mit ihrem inneren Bereich der Schrägkanten 23 auf dem Nutgrund 16 der Nuten 12 der Spannteller 1 auf, so daß die Spannkeile 2 um eine große Distanz aus dem Umfang 13 der Spannteller 1 hervorragen. Damit kann durch Verändern des axialen Abstands der Spannteller 1 die Position der Spannkeile 2 in radialer Richtung verändert werden. Der Zusammenhang ist dabei wie vorstehend beschrieben derart, daß bei einer Annäherung der Spannteller 1 aneinander die Spannkeile 2 sich radial nach außen bewegen.

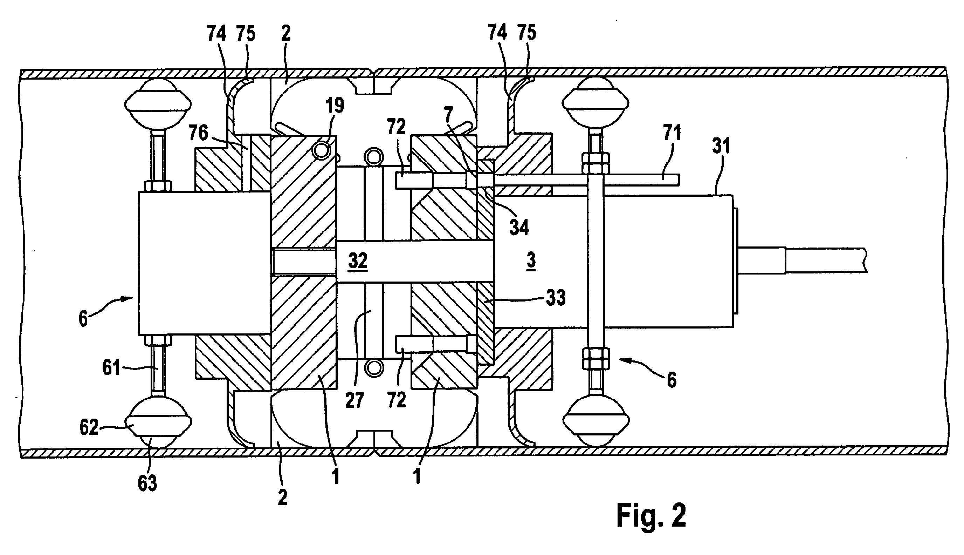

Zur Veränderung des axialen Abstands der Spannteller 1 ist die Betätigungseinrichtung 3 vorgesehen. Sie umfaßt ein Betätigungsorgan 31 sowie eine Zugstange 32. Das Betätigungsorgan 31 ist über eine Flanschplatte 33 an der Stirnseite 15 eines der beiden Spannteller, bei dem in Fig. 2 dargestellten Ausführungsbeispiel des rechts dargestellten, mittels nicht dargestellter Befestigungsmittel befestigt. Das Betätigungsorgan 31 wirkt auf die Zugstange 32, die sich durch die beiden Zentrumsbohrungen 11 der beiden Spannteller 1 hindurch erstreckt und die an dem Betätigungsorgan 31 entfernteren der beiden Spannteller 1 zugfest befestigt ist. Zweckmäßigerweise sind dazu, wie in Fig. 2 dargestellt ist, die beiden Zentrumsbohrungen 11 der beiden Spannteller 1 verschieden groß ausgeführt: Die Zentrumsbohrung 11 des dem Betätigungsorgan 31 näheren Spanntellers 1 mit dem Befestigungsflansch 33 weist einen größeren Durchmesser auf, der für einen Durchgang der Befestigungsspindel 32 ausreicht; die Zentrumsbohrung 11 des dem Betätigungsorgans 31 ferneren Spanntellers (in der Fig. 2 der linke) weist einen kleineren Durchmesser auf und ist mit einem Innengewinde zur zugfesten Aufnahme mit einem Außengewinde versehenen äußeren Bereichs der Zugstange 32 versehen. Das Betätigungsorgan 31 wirkt mit der Zugstange 32 derart zusammen, daß die Zugstange 32 entweder zu dem Betätigungsorgan 31 hin oder von ihm weg bewegt wird. Dadurch verändert sich der axiale Abstand der beiden Spannteller 1 voneinander, wodurch sich aufgrund der Schrägung um den Winkel β die Spannkeile 2 nach innen bzw. nach außen bewegen. Bei dem darstellten Ausführungsbeispiel ist das Betätigungsorgan 31 als ein hydraulisches Stellglied ausgeführt; es sind jedoch auch andere Ausführungsarten denkbar, beispielsweise in Form eines auf eine Gewindestange wirkende Elektromotors, eines pneumatischen Antriebs, oder einer rein mechanischen Betätigung über eine Gewindestange.

Um die Spannkeile 2 an den Spannteller 1 zu halten, ist eine Führung 4 vorgesehen. Sie umfaßt eine elastische Halteeinrichtung 41, die an dem Spannteller 1 angeordnet ist, sowie eine damit zusammenwirkende Führungsrinne 42, die an den Spannkeilen 2 angeordnet ist. Die elastische Halteeinrichtung 41 umfaßt eine Verriegelungskugel 43, die von einer Feder 44 beaufschlagt ist. Die elastische Halteeinrichtung 41 mit der Verriegelungskugel 43 sowie der Feder 44 ist jeweils in einer Bohrung 19 der Spannteller 1 angeordnet. Die Bohrung 19 ist derart an den Spannteller 1 ausgeführt, daß sie sich ausgehend von dem unteren, dem Nutgrund 16 nahen Bereich der Nuten 12 in tangentialer Richtung durch den Spannteller 1 erstreckt, bis sie schließlich etwa im Bereich zwischen zwei benachbarten Nuten 12 aus dem Umfang der 13 des Spanntellers 1 austritt. Die Bohrung 19 ist mit einem Innengewinde versehen, das zur Aufnahme einer Hohlschraube 45 ausgeführt ist. Die Hohlschraube 45 ergreift mit ihrem äußeren Gewinde in das Innengewinde der Bohrung 19 ein und kann so in die Bohrung 19 hineingeschraubt werden. In ihrem hohlen Schaft nimmt die Hohlschraube 45 die Feder 44 mitsamt der Verriegelungskugel 43 auf. Dabei bildet das dem Kopf zugewandte Ende des Hohlraums der Hohlschraube 45 das Gegenlager für die Feder 44. Durch verschieden weites Hineinschrauben der Hohlschraube 45 in die Bohrung 19 läßt sich die Vorspannkraft der Feder 44 einstellen, mit der dann schließlich die Verriegelungskugel 43 auf die Führungsrinne 42 der Spannkeile 2 wirkt und diese dann festhält.

Die Führungsrinne 42 der Spannkeile 2 läuft parallel etwa über dem gesamten Bereich der Schrägkante 23. Damit wird erreicht, daß unabhängig von dem axialen Abstand der Spannteller 1 und der damit vorgegebenen radialen Position der Spannkeile 2 die Führungsrinne 42 immer etwa in dem selben Abstand dazu dem Nutgrund 16 der Nut 12 angeordnet ist, so daß im Normalfall stets die Verriegelungskugel 43 der Führung 4 in die Führungsrinne 42 eingreifen kann und damit die Spannkeile 2 an den Spanntellern 1 hält.

Auf diese Weise wird erreicht, daß dank der Führung 4 die Spannkeile 2 verhältnismäßig leicht entlang ihrer vorgesehenen Bahn an den Spanntellern 1 verschoben werden können. Suchen die Spannkeile 2 aber, beispielsweise veranlaßt durch eine Fehlstellung der Spannvorrichtung oder eine Ovalität des/der Rohrenden, die ihnen zugedachte Bahn zu verlassen, so setzt die Führung 4 dem einen beträchtlichen, gleichwohl aber überwindbaren Widerstand entgegen, da dazu die Verriegelungskugel 43 gegen die Kraft der Feder 44 aus ihrer normalen Position in der Führungsrinne 42 heraus bewegt werden muß. Dadurch wird einerseits eine sichere Führung der Spannkeile 2 an den Spanntellern 1 erreicht, ohne aber andererseits eine bei Fehlstellungen erforderliche Bewegung der Spannkeile 2 aus ihrer normalen Position hinaus vollständig zu verhindern.

Die Spannvorrichtung umfaßt ferner noch eine Zentrierhilfe 6 und eine Formiergaseinrichtung 7. Die Zentrierhilfe 6 besteht aus drei sternförmig angeordneten Abstandshaltern 61, die an ihrem äußeren Ende eine Verdickung 62 mit einer zur Anlage an die Innenoberfläche der zu verschweißenden Rohre vorgesehenen Kontaktfläche 63 aufweisen. Sie dient dazu, die Spannvorrichtung in den Rohren zu zentrieren. Die Formiergaseinrichtung 7 umfaßt ein Zuführungsrohr 71, das an die Flanschplatte 33 angeschlossen ist und über eine entsprechende Bohrung 34 in der Flanschplatte und die Öffnungen 17 in dem Spannteller 1, an dem die Flanschplatte 33 befestigt ist, zu dem Innenraum zwischen den beiden Spanntellern 1 geführt ist. Am innenraumseitigen Ende der Gasöffnungen 17 sind gesinterte Feinfilter 72 vorgesehen. In der Flanschplatte ist ein Ringkanal (nicht dargestellt) vorgesehen, um mit der einen Formiergaszuführung 71 die Mehrzahl von Gasdurchtrittsöffnungen 17 mit Formiergas zu versorgen. Jeweils an den äußeren Stirnseiten 15 der beide Flanschplatten sind Formiergasdichtungen 74 angeordnet, die in ihrem radialen Außenbereich Dichtlippen 75 zur Anlage an die innere Rohroberfläche der miteinander zu verschweißenden Rohrenden versehen sind. Die Abmessung der Dichtlippen 75 ist dabei so gewählt, daß sie einen etwas größeren Durchmesser als den Innendurchmesser der miteinander zu verschweißenden Rohrenden 91, 92 aufweisen, um eine ausreichende Anlage der Dichtlippen 75 an die Innenoberfläche der Rohrenden 91, 92 zu erzielen. Auf diese Weise ist der Bereich zwischen den beiden Formiergasdichtungen 74 mit der Spannvorrichtung gasdicht von dem übrigen Innenraum der Rohrenden getrennt. Durch Zuführen von geeignetem Formiergas über die Formiergaszuführungseinrichtung 7 kann damit eine zum Schweißen der Rohrenden günstige Gasatmosphäre erzeugt werden. Überschüssiges Formiergas kann über Auslüftungskanäle 76 abgeführt werden.

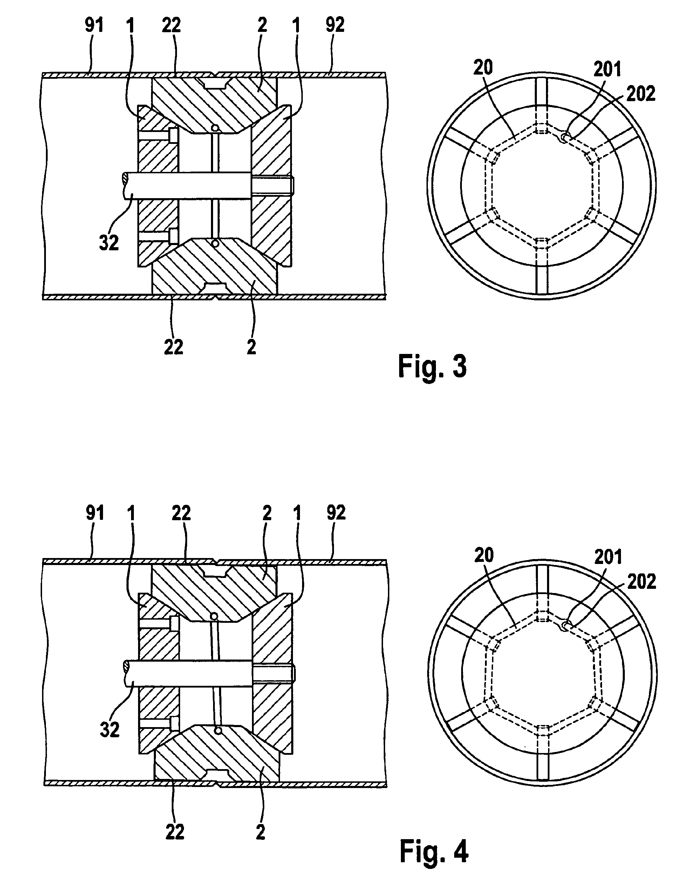

In Fig. 3 und 4 ist der Einsatz der erfindungsgemäßen Spannvorrichtung dargestellt. In Fig. 3 ist die Spannvorrichtung in Normallage, d. h. in korrekt ausgerichteter Stellung, dargestellt. In Fig. 4 ist die Spannvorrichtung in einer Fehlstellung, d. h. in nicht korrekt ausgerichteter Stellung, dargestellt. Man erkennt, daß in Fig. 3 die beiden miteinander zu verschweißenden Rohrenden 91, 92 koaxial zueinander ausgerichtet sind. Damit sind die Spannkeile 2 mit ihrer äußeren Kante 22 parallel zur gemeinsamen Mittelachse der miteinander zu verschweißenden Vorrichtung und damit auch der Spannvorrichtung ausgerichtet. Die Spannteller 1 sind parallel zueinander senkrecht zur Axialrichtung, d. h. radial ausgerichtet angeordnet. Demgegenüber erkennt man in Fig. 4, daß die Spannkeile 2 bedingt durch den axialen Versatz der miteinander zu verschweißenden Rohrenden nicht parallel zur Rohrmittelachse ausgerichtet sind, sondern vielmehr verkippt sind. Dementsprechend sind auch die Spannteller 1 aus ihrer Normallage in eine der Radialebenen verkippt. Wie man insbesondere im Bereich des Übergangs zwischen dem Spannteller 1 und dem unteren Spannkeil 2 erkennt, stimmen bedingt durch die Fehlstellung die schrägen Winkel zwischen dem Nutgrund 16 der Nuten 12 der Spannteller 1 sowie der Schrägkante 23 der Spannkeile 2 nicht mehr überein. Dadurch liegen die Spannkeile 2 nicht mehr flächig auf dem Nutgrund 16 auf, sondern sie sind daraus in eine Fehlstellung ausgelenkt. Die Führung 4 erlaubt dank der elastischen Halteeinrichtung eine solche Fehlstellung, ohne daß dabei Schäden an der Spannvorrichtung auftreten oder Verklemmungen an der Führung 4 auftreten. Dazu wird die Verriegelungskugel 43 gegen die Kraft der Feder 44 aus der Führungsrinne 42 heraus bewegt, so daß die Spannkeile 2 aus ihrer Normallage gekippt werden können. Ferner ist die Führung 4 aufgrund ihrer Vorspannung durch die Feder 44 bestrebt, die Spannkeile 2 in ihre Normallage zurückzuführen. Schließlich wird durch Betätigen der Spanneinrichtung und dem damit bewirkten Verringern des axialen Abstands zwischen den Spanntellern durch die daraus resultierende radial nach außen gerichteten Bewegung der Spannkeile 2 eine gegenseitige Ausrichtung der beiden Rohrendenpaare 91, 92 erzielt werden. Ferner ist die Spannfeder 27 in der Fehlstellung (s. Fig. 4) gegenüber der Normallage (s. Fig. 3) verformt und übt daher eine zusätzliche rückstellende Kraft aus.

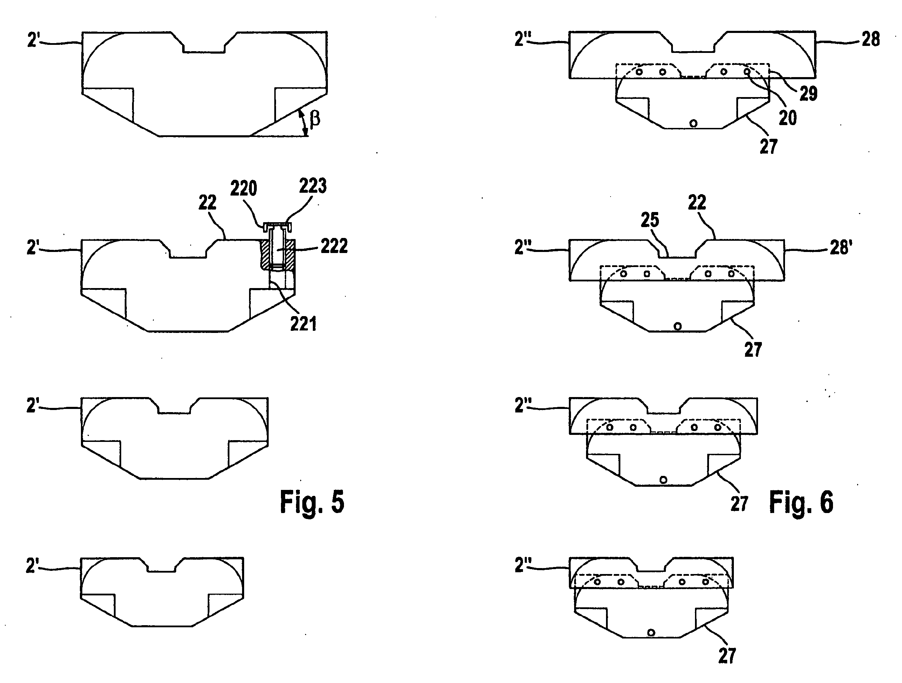

In Fig. 5 und 6 sind Sätze von verschiedenen Spannkeilen 2', 2'' dargestellt. Aus den in Fig. 5 dargestellten Spannkeilen werden, jeweils in Abhängigkeit von dem Innendurchmesser der miteinander zu verschweißenden Rohrenden, diejenigen Spannkeile 2' ausgewählt, die eine passende Größe aufweisen, und in die Spannteller 1 eingesetzt. Dank der elastischen Halteeinrichtung mit der durch eine Feder 44 vorgespannten Verriegelungskugel 43 gestaltet sich das Auswechseln einfach. Die auszuwechselnden Spannkeile können durch einfaches Ziehen aus den Nuten 12 entfernt werden, während die neu einzusetzenden Spannkeile in entsprechender Weise leicht in die Nuten 12 eingebracht werden können. Das Erreichen der korrekten Position der Spannkeile 2 wird durch die erfindungsgemäße elastische Halteeinrichtung der Führung 4 erleichtert. Je nach Vorspannung der Feder 44 ist das Erreichen der Normallage deutlich fühlbar und gegebenenfalls auch hörbar.

Bei dem in Fig. 6 dargestellten Ausführungsbeispiel sind die Spannkeile 2" zweiteilig ausgeführt. Sie bestehen aus einem Gleitstück 27 und einem Aufsatzstück 28. Das Gleitstück 27 ist spanntellerseitig vorgesehen und umfaßt die kürzere innere Kante 21 sowie die Schrägkanten 23. Das Aufsatzstück 28 ist spanntellerfern, d. h. rohrseitig vorgesehen und umfaßt die längere äußere Kante 22 zum Kontaktieren der Rohrinnenoberfläche mit der Aussparung 25. Zur Befestigung des Aufsatzstücks 28 auf dem Gleitstück 27 weist zweckmäßigerweise das Aufsatzstück 28 eine Aussparung 29 auf, in welche das Gleitstück 27 mit seinem äußeren Bereich eingeführt ist. Um das Aufsatzstück 28 sicher auf dem Gleitstück 27 zu befestigen, sind eine Mehrzahl von Befestigungsschrauben 20 vorgesehen, die durch entsprechende Bohrungen in dem Bereich der Aussparung 29 des Aufsatzstücks 28 und dem entsprechenden äußeren Bereich des Gleitstücks 27 geführt sind.

Von den Aufsatzstücken 28 sind Sätzen in verschiedenen Größen vorgesehen, die nach Bedarf auf die Gleitstücke 27 montiert werden. Das Anpassen der Spannvorrichtung an den Innendurchmesser der miteinander zu verschweißenden Rohrenden geschieht bei dieser Ausführungsform also dadurch, daß die Aufsatzstükke 28 ausgewechselt werden. Dies hält nicht nur den Herstellungsaufwand für die Sätze klein, sondern ermöglicht auch einen leichten Austausch der besonders vom Verschleiß betroffenen Aufsatzstücke 28.

Um das Handhaben der Sätze von Spannkeilen zu vereinfachen, ist die Spannfeder 20, welche die einzelnen Spannkeile 2 eines Satzes von Spannkeilen miteinander verbindet, öffenbar ausgeführt. Dazu weist sie eine Öse 201 sowie einen Haken 202 an ihren jeweiligen Enden auf, die bei in die Führungsschlitze 12 eingesetzten Spannkeilen miteinander verbunden werden und somit zusätzlich zur Führung 4 eine Verliersicherung darstellen. Zum Abnehmen des Satzes von Spannkeilen braucht der Haken 202 nur aus der Öse 201 genommen zu werden, danach können die Spannkeile 2 einzeln aus den Führungsschlitzen 12 genommen werden; im abgenommenen Zustand sind die einzelnen Spannkeile 2 dann durch die Spannfeder 20 aneinander gehalten. Damit wird der Gefahr eines unbeabsichtigten Absonderns eines der Spannkeile von den übrigen vorgebeugt.

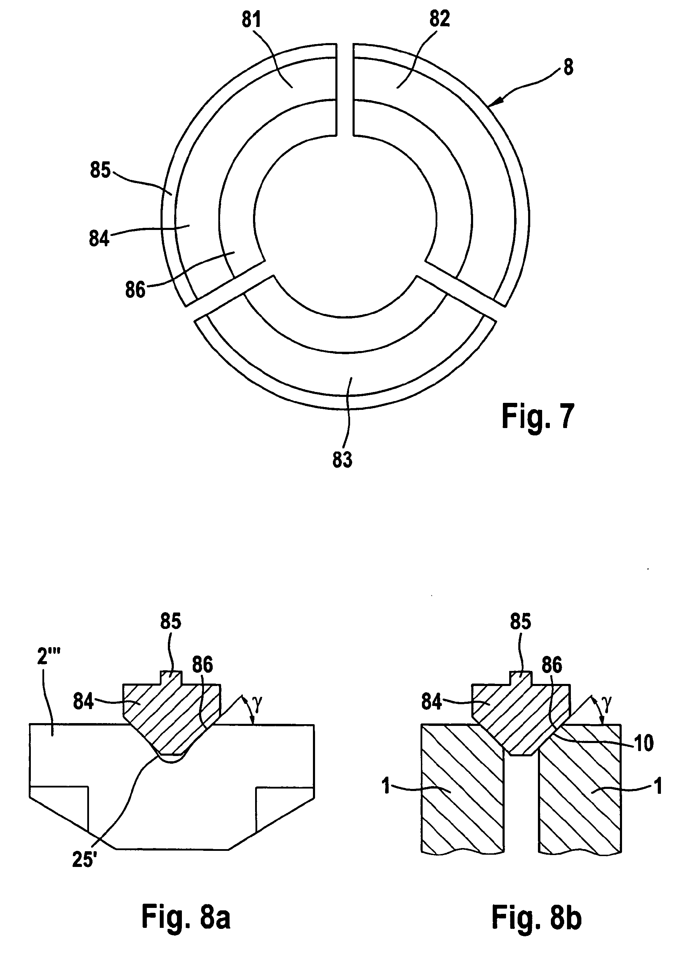

Fig. 7 ist ein Spreizring 8 für die erfindungsgemäße Spannvorrichtung dargestellt. Er ist aus, in dem dargestellten Ausführungsbeispiel drei, Segmenten 81, 83, 83 gebildet. Jedes dieser Segmente erstreckt sich über einen Winkel von etwa 120°, so daß die drei Segmente zusammengesetzt etwa einen vollständigen Ring bilden. Im gespreizten Zustand ist der Spreizring 8 nicht ganz umlaufend, da zwischen den einzelnen Segmenten abhängig von dem Spreizzustand Spalte entstehen. Jedes der Segmente 81, 82, 83 des Spreizrings 8 ist aus einem hochfesten Material, wie beispielsweise Edelstahl, hergestellt. Sein Hauptkörper 84 weist an seiner äußeren Umfangsfläche einen erhabenen Drucksattel 85 auf, der vorzugsweise über den gesamten Bereich der äußeren Umfangsfläche läuft. Der Drucksattel 85 weist in axialer Richtung nur eine verhältnismäßig kleine Ausdehnung auf, die um einiges geringer als die axiale Ausdehnung des Hauptkörpers 84 der Ringsegmente 81, 82, 83 ist. Vorzugsweise beträgt die axiale Ausdehnung des Drucksattels 85 etwa 2 - 8 mm, vorzugsweise 4 - 6 mm. An der inneren Umfangsfläche des Hauptkörpers 84 ist eine doppelte Abschrägung 86 angeordnet. Die Abschrägung 86 ist um einen Winkel y gegenüber der Axialrichtung geneigt. Zur Verdeutlichung ist der Winkel y übertrieben groß dargestellt; vorzugsweise liegt er im Bereich von 3° bis 35°, weiter vorzugsweise bei etwa 10°.

Wie in Fig. 8a dargestellt ist, kann der Spreizring 8 mit seinen Segmenten 81, 82, 83 auf die Spannkeile 2''' gesetzt werden. Wenn die Spannvorrichtung auf die beschriebene Weise betätigt wird, bewegen sich die Spannkeile 2''' in radialer Richtung nach außen, damit bewegen sich auch die Segmente 81, 82, 83 des Spannrings 8 nach außen, wodurch schließlich der Drucksattel 85 auf die innere Rohroberfläche einwirkt und diese aufweitet. Damit ausreichend Raum zur Aufnahme des Spreizrings 8 verbleibt, handelt es sich bei den in diesem Fall verwendeten Spannkeilen 2''' vorzugsweise um solche, die kleiner sind als diejenigen Spannkeile 2, die zum Spannen der Spannvorrichtung in dem Rohr verwendet werden. Vorzugsweise weisen diese Spannkeile 2''' eine Aussparung 25' auf, die eine zur Aufnahme der Segmente 81, 82, 83 des Spreizrings 8 passende Kontur aufweist.

Bei dem in Fig. 8b dargestellten Ausführungsbeispiel sind die Segmente des Spreizrings 8 unmittelbar zwischen den beiden Spanntellern 1 angeordnet; die Spannkeile 2 sind hierbei entfernt worden. Die Spannteller 1 weisen an ihrer jeweils einander zugewandten Außenkante eine Anfasung 10 auf. Diese Anfasung 10 weist den selben Winkel y wie auch die Anschrägung 86 des Spreizrings 8 auf. Dadurch liegt der Hauptkörper 84 der Segmente 81, 82, 83 des Spannrings 3 mit der Abschrägung 86 flächig auf der Anfasung 10 der Spannteller 1 auf. Durch Verändern des Abstands zwischen den Spanntellern 1 werden damit die Segmente 81, 82, 83 des Spreizrings 8 in radialer Richtung bewegt. Durch Aktivieren der Betätigungseinrichtung 3 und der dadurch hervorgerufenen Änderung des Abstands zwischen den Spanntellern 1 kann auf die bereits vorstehend beschriebene Weise eine radiale Bewegung der Segmente 81, 82, 83 des Spreizrings 8 bewirkt werden, um so eine Erweiterung des Rohrs vorzunehmen.

Bei einer bevorzugten Variante sind Spannkeile 2' mit Drehfüßen 220 an einer Seite versehen. Dazu weisen die Spannkeile 2' eine von innen nach außen laufende Durchgangsöffnung 221 auf, die mit einem Innengewinde versehen ist und in die eine Einstellschraube 222 eingeschraubt ist. Die Einstellschraube 222 weist an ihrem äußeren Ende einen Kopf 223 auf. Durch Verdrehen der Einstellschraube 222 in der Durchgangsöffnung 221 kann die Position der Einstellschraube verändert werden, so daß der Abstand des Kopfes 223 von der äußeren Seite 22 der Spannkeile 2' verändert werden kann. Dank der Einstellschrauben 222 mit den Köpfen 223 können auch solche Rohre miteinander verschweißt werden, die einen unterschiedlichen Innendurchmesser aufweisen. Die Einstellschraube 222 wird entsprechend dem Unterschied der Durchmesser der beiden miteinander zu verschweißenden Rohre eingestellt, so daß der Spannkeil 2' auf der Seite mit dem Drehfuß 220 in das Rohr mit dem größeren Innendurchmesser und auf der Seite ohne die Einstellschraube in das Rohr mit dem kleineren Innendurchmesser platziert werden kann.

Gerade bei solchen komplizierteren Schweißstellen, aber auch bei anderen, kann es von besonderem Vorteil sein, wenn eine Beobachtungsmöglichkeit für die Schweißstelle bzw. die Vollständigkeit und Güte der Schweißnaht geschaffen wird. Bei einer vorteilhaften Ausführungsform weist dazu einer der Spannteller eine nicht dargestellte axiale Durchgangsöffnung auf, in die bündig ein axial verschiebbares und drehbares Kameragehäuse eingesetzt ist. Durch Verschieben des Kameragehäuses zu der Schweißstelle hin kann mit einer vollständigen Umdrehung des Kameragehäuses die gesamte Länge der Schweißnaht beobachtet und auf ihre Güte hin inspiziert werden. Vorzugsweise weist dazu das Kameragehäuse zusätzlich eine Beleuchtungseinrichtung auf. Damit die Kamera in dem Kameragehäuse bei der Schweißung nicht beschädigt wird, wird das Kameragehäuse von der Schweißstelle in den Spannteller hinein gezogen, wenn keine Beobachtung durchgeführt wird. Zur Übertragung der Bildsignale zu einem außenliegenden Kontrollmonitor kann eine Kabelverbindung oder eine drahtlose Übertragung, beispielsweise durch Funk, vorgesehen sein.

## Patentansprüche

1. Spannvorrichtung zum Ausrichten und Spannen von zwei Rohrenden mit Spanntellern (1), die axial beabstandet angeordnet sind, sich in axialer Richtung erstreckenden Spannkeilen (2), die an einer ersten Seite (21, 23) in Radial-Richtung beweglich an den Spanntellern (1) gelagert sind und an einer zweiten Seite (22) eine Kontaktfläche zum Einwirken auf die Rohrenden (91, 92) aufweisen, einer elastischen Halteeinrichtung zum Halten der Spannkeile (2) an den Spanntellern (1) und einer Betätigungseinrichtung (3) zum Bewegen der Spannkeile (2), **dadurch gekennzeichnet, daß** eine Führung (4) zum Führen der Spannkeile (2) an den Spanntellern (1) in Form von Führungsnuten (12) vorgesehen ist, wobei der Nutgrund (16) der Führungsnuten (12) eine Schrägfläche bildet.

2. Spannvorrichtung nach Anspruch 1, **dadurch gekennzeichnet, daß** die elastische Halteeinrichtung eine federbelastete Kugel (43) aufweist, die an einem der beiden, dem Spannteller (1) oder den Spannkeilen (2), angeordnet ist, und mit dem anderen der beiden, den Spannkeilen (2) oder dem Spannteller (1), zusammenwirkt.

3. Spannvorrichtung nach Anspruch 2, **dadurch gekennzeichnet, daß** die elastische Halteeinrichtung ferner eine Vertiefung (42) umfaßt, die an dem anderen der beiden, den Spannkeilen (2) oder dem Spannteller (1), angeordnet ist und mit der federbelasteten Kugel (43) zusammenwirkt.

4. Spannvorrichtung nach Anspruch 2 oder 3, **dadurch gekennzeichnet, daß** als Lager für die federbelastete Kugel eine Hohlschraube (45) vorgesehen ist.

5. Spannvorrichtung nach einem der Ansprüche 1 bis 4, **dadurch gekennzeichnet, daß** im Bereich der Führungsnuten (12) eine Tangentialbohrung (19) zur Aufnahme der federbelasteten Kugel (43) vorgesehen ist, die mit ihrem einen Ende in der Führungsnut (12) und mit ihrem anderen Ende an der Umfangsfläche (13) der Spannteller (1) endet.

6. Spannvorrichtung nach einem der vorhergehenden Ansprüche, **dadurch gekennzeichnet, daß** die Spannkeile (2) aus einer Kupfer-Chrom-Nickel-Legierung oder Edelstahl bestehen.

7. Spannvorrichtung nach einem der vorhergehenden Ansprüche, **dadurch gekennzeichnet, daß** an äußeren Stirnflächen (15) der Spannteller (1) Dichteinrichtungen (74) angeordnet sind, die zum dichtenden Zusammenwirken mit einer Oberfläche der Rohrenden ausgebildet sind.

8. Spannvorrichtung nach einem der vorhergehenden Ansprüche, **dadurch gekennzeichnet, daß** an mindestens einem der Spannteller (1) eine Formiergasführung (7) vorgesehen ist, um zugeführtes Formiergas in den Bereich zwischen die Spannteller (1) zu leiten.

9. Spannvorrichtung nach Anspruch 8, **dadurch gekennzeichnet, daß** eine Anschlußplatte (33) mit einem Anschluß (71) und einer Durchgangsöffnung (17) für das zuzuführende Formiergas vorgesehen ist, die über einen Ringkanal mit der Formiergasführung (7) des Spanntellers (1) in Verbindung steht.

10. Spannvorrichtung nach Anspruch 8 oder 9, **dadurch gekennzeichnet, daß** mindestens eine Entlüftungsöffnung (76) an einem der Spannteller (1), vorzugsweise dem ohne Formiergasführung (7), vorgesehen ist.

11. Spannvorrichtung nach einem der vorhergehenden Ansprüche, **dadurch gekennzeichnet, daß** die Betätigungseinrichtung als Zugspindel ausgebildet ist.

12. Spannvorrichtung nach einem der Ansprüche 1 bis 10, **dadurch gekennzeichnet, daß** die Betätigungseinrichtung (3) hydraulisch ausgeführt ist.

13. Spannvorrichtung nach einem der vorhergehenden Ansprüche, **dadurch gekennzeichnet, daß** die Spannkeile (2, 2') auswechselbar an den Spanntellern (1) gehalten sind.

14. Spannvorrichtung nach einem der vorhergehenden Ansprüche, **dadurch gekennzeichnet, daß** ein aus mindestens drei Segmenten (81, 82, 83) bestehender Spreizring (8) vorgesehen ist, dessen äußere Umfangsfläche einen umlaufenden Drucksattel (85) aufweist.

15. Spannvorrichtung nach Anspruch 14, **dadurch gekennzeichnet, daß** der Spreizring (8) an seiner inneren Umfangsfläche Abschrägungen (86) aufweist.

16. Spannvorrichtung nach Anspruch 15, **dadurch gekennzeichnet, daß** die Spannteller (1) an ihrer zum Zusammenwirken mit den Spannkeilen bestimmten Kante einer Anphasung (10) aufweisen, deren Winkel γ vorzugsweise mit dem der Abschrägungen (86) übereinstimmt.

17. Spannvorrichtung nach Anspruch 16, **dadurch gekennzeichnet, daß** der Winkel γ kleiner als der Winkel der Schrägfläche der Nutgrund (16) der Führungsnuten (12) ist.

18. Spannvorrichtungs-Satz zum Ausrichten und Spannen von Rohrenden in verschiedenen Größen, mit Spanntellern (1), die mit axialem Abstand voneinander angeordnet sind, sich in axialer Richtung erstreckenden Spannkeilen (2), die mit einer ersten Seite (21, 23) in Radial-Richtung beweglich an den Spanntellern (1) gelagert sind und an einer zweiten Seite (22) eine Kontaktfläche zum Einwirken auf die Rohrenden (91, 92) aufweisen, einer Führung zum Führen der Spannkeile (2) an den Spanntellern (1) und einer Betätigungseinrichtung (3) zum Bewegen der Spannkeile (2), **dadurch gekennzeichnet, daß** die Führung (4) zum Führen der Spannkeile (2) an den Spanntellern (1) in Form von Führungsnuten (12) ausgebildet ist, wobei der Nutgrund (16) der Führungsnuten (12) eine Schrägfläche bildet, und daß die Führung (4) mit einer elastischen Halteeinrichtung zum Halten der Spannkeile (2) an den Spanntellern (1) versehen ist, wobei die Spannkeile (2) auswechselbar sind und mehrere Sätze von Spannkeilen (2, 2') vorgesehen sind, die unterschiedliche Abstände von der inneren zur äußeren Seite (21, 22) aufweisen.

19. Spannvorrichtungs-Satz nach Anspruch 18, **dadurch gekennzeichnet, daß** die Spannkeile (2) mehrteilig mit einem spanntellerseitigen Gleitstück (27) und einem rohrseitigen Aufsatzstück (28) ausgeführt sind, wobei das Aufsatzstück (28) auswechselbar ist und ein Satz von Aufsatzstücken (28) unterschiedlicher Größe vorgesehen ist.

## Claims

1. Clamping device for aligning and clamping two pipe ends, having clamping plates (1) which are arranged at an axial distance apart, clamping wedges (2) which extend in the axial direction and which are mounted at a first side (21,23) on the clamping plates (1) in such a way as to be movable in the radial direction and have on a second side (22) a contact surface for acting on the pipe ends (91, 92), an elastic holding means for holding the clamping wedges (2) on the clamping plates (1), and an actuating means (3) for moving the clamping wedges (2), **characterized in that** a guide (4) for guiding the clamping wedges (2) on the clamping plates (1) is provided in the form of guide slots (12), the root (16) of the guide slots (12) forming an inclined surface.

2. Clamping device according to Claim 1, **characterized in that** the elastic holding means has a spring-loaded ball (43) which is arranged on one of the two parts
- the clamping plate (1) or the clamping wedges (2)
- and interacts with the other of the two parts
- the clamping wedges (2) or the clamping plate (1).

3. Clamping device according to Claim 2, **characterized in that,** furthermore, the elastic holding means comprises a recess (42) which is arranged on the other of the two parts - the clamping wedges (2) or the clamping plate (1) - and interacts with the spring-loaded ball (43).

4. Clamping device according to Claim 2 or 3, **characterized in that** a hollow screw (45) is provided as bearing for the spring-loaded ball.

5. Clamping device according to one of Claims 1 to 4, **characterized in that** a tangential hole (19) for accommodating the spring-loaded ball (43) is provided in the region of the guide slots (12), said tangential hole (19) ending with its one end in the guide slot (12) and with its other end at the circumferential surface (13) of the clamping plates (1).

6. Clamping device according to one of the preceding claims, **characterized in that** the clamping wedges (2) are made of a copper-chromium-nickel alloy or high-grade steel.

7. Clamping device according to one of the preceding claims, **characterized in that** sealing means (74) which are designed for interacting with a surface of the pipe ends in a sealing manner are arranged on the outer end faces (15) of the clamping plates (1).

8. Clamping device according to one of the preceding claims, **characterized in that** a forming-gas conduit (7) is provided on at least one of the clamping plates (1) in order to direct supplied forming gas into the region between the clamping plates (1).

9. Clamping device according to Claim 8, **characterized in that** a connection plate (33) having a connection (71) and a through-opening (17) for the forming gas to be supplied is provided, and this connection plate (33) is connected to the forming-gas conduit (7) of the clamping plate (1) via an annular passage.

10. Clamping device according to Claim 8 or 9, **characterized in that** at least one vent opening (76) is provided on one of the clamping plates (1), preferably the one without forming-gas conduit (7).

11. Clamping device according to one of the preceding claims, **characterized in that** the actuating means is designed as a draw spindle.

12. Clamping device according to one of Claims 1 to 10, **characterized in that** the actuating means (3) is of hydraulic design.

13. Clamping device according to one of the preceding claims, **characterized in that** the clamping wedges (2, 2') are interchangeably held on the clamping plates (1).

14. Clamping device according to one of the preceding claims, **characterized in that** an expanding ring (8) is provided which consists of at least three segments (81, 82, 83) and the outer circumferential surface of which has an encircling pressure saddle (85).

15. Clamping device according to Claim 14, **characterized in that** the expanding ring (8) has bevels (86) on its inner circumferential surface.

16. Clamping device according to Claim 15, **characterized in that** the clamping plates (1) have a bevel (10) on their edge intended for interacting with the clamping wedges, the angle γ of said bevel (10) preferably corresponding to that of the bevels (86).

17. Clamping device according to Claim 16, **characterized in that** the angle γ is smaller than the angle of the inclined surface of the root (16) of the guide slots (12).

18. Clamping device set for aligning and clamping pipe ends in various sizes, having clamping plates (1) which are arranged at an axial distance from one another, clamping wedges (2) which extend in the axial direction and which are mounted with a first side (21,23) on the clamping plates (1) in such a way as to be movable in the radial direction and have on a second side (22) a contact surface for acting on the pipe ends (91, 92), a guide for guiding the clamping wedges (2) on the clamping plates (1), and an actuating means (3) for moving the clamping wedges (2), **characterized in that** the guide (4) for guiding the clamping wedges (2) on the clamping plates (1) is provided in the form of guide slots (12), the root (16) of the guide slots (12) forming an inclined surface, and **in that** the guide (4) is provided with an elastic holding means for holding the clamping wedges (2) on the clamping plates (1), the clamping wedges (2) being interchangeable and a plurality of sets of clamping wedges (2, 2') being provided which have different distances from the inner to the outer side (21, 22).

19. Clamping device set according to Claim 18, **characterized in that** the clamping wedges (2) are of multipart design having a sliding piece (27) on the clamping-plate side and a top piece (28) on the pipe side, the top piece (28) being interchangeable and a set of top pieces (28) of different size being provided.

## Revendications

1. Dispositif de serrage pour aligner et serrer deux extrémités de tube, comportant des plateaux de serrage (1), qui sont disposés à distance axiale l'un de l'autre, des cales de serrage (2) orientées dans la direction axiale, qui, sur un premier côté (21, 23), sont montées sur les plateaux de serrage (1) de manière mobile dans la direction radiale et comportent, sur un deuxième côté (22), une surface de contact destinée à agir sur les extrémités de tube (91, 92), un dispositif de fixation élastique destiné à maintenir les cales de serrage (2) sur les plateaux de serrage (1), et un dispositif de manoeuvre (3) destiné à déplacer les cales de serrage (2), **caractérisé en ce qu'**il est prévu un guidage (4) destiné à guider les cales de serrage (2) sur les plateaux de serrage (1) et réalisé en forme de rainures de guidage (12), le fond (16) des rainures de guidage (12) formant une surface inclinée.

2. Dispositif de serrage selon la revendication 1, **caractérisé en ce que** le dispositif de fixation élastique comporte une bille (43) sollicitée par ressort, laquelle est disposée sur l'un des deux plateaux de serrage (1) ou l'une des deux cales de serrage (2), et coopère avec l'autre des deux plateaux de serrage (1) ou l'autre des deux cales de serrage (2).

3. Dispositif de serrage selon la revendication 2, **caractérisé en ce que** le dispositif de fixation comporte en outre un creux (42) qui est réalisé sur l'autre des deux plateaux de serrage (1) ou l'autre des deux cales de serrage (2) et coopère avec la bille (43) sollicitée par ressort.

4. Dispositif de serrage selon la revendication 2 ou 3, **caractérisé en ce qu'**il est prévu une vis à tête creuse pour constituer le palier pour la bille sollicitée par ressort (45).

5. Dispositif de serrage selon l'une quelconque des revendications 1 à 4, **caractérisé en ce que,** dans la zone des rainures de guidage (12), il est prévu une forure tangentielle (19) destinée à recevoir la bille (43) sollicitée par ressort, laquelle se termine avec l'une de ses extrémités dans la rainure de guidage (12) et avec son autre extrémité sur la surface périphérique (13) des plateaux de serrage (1).

6. Dispositif de serrage selon l'une quelconque des revendications précédentes, **caractérisé en ce que** les cales de serrage (2) sont réalisées dans un alliage de cuivre, chrome et nickel ou en acier inoxydable.

7. Dispositif de serrage selon l'une quelconque des revendications précédentes, **caractérisé en ce que** sur des faces frontales (15) extérieures des plateaux de serrage (1) sont logées des garnitures d'étanchéité (74), qui sont configurées pour coopérer de manière étanche avec une surface des extrémités de tube.

8. Dispositif de serrage selon l'une quelconque des revendications précédentes, **caractérisé en ce que,** sur au moins un des plateaux de serrage (1), il est prévu un guidage (7) pour gaz de formation, en vue de guider dans la zone entre les plateaux de serrage (1) un gaz de formation acheminé.

9. Dispositif de serrage selon la revendication 8, **caractérisé en ce qu'**il est prévu une plaque de raccordement (33) avec un raccord (71) et une ouverture de passage (17) pour le gaz de formation acheminé, laquelle est reliée via un conduit annulaire avec le guidage (7) pour gaz de formation du plateau de serrage (1).

10. Dispositif de serrage selon la revendication 8 ou 9, **caractérisé en ce qu'**il est prévu au moins un orifice d'échappement d'air (76) sur l'un des plateaux de serrage (1), de préférence celui sans le guidage (7) pour gaz de formation.

11. Dispositif de serrage selon l'une quelconque des revendications précédentes, **caractérisé en ce que** le dispositif de manoeuvre est réalisé sous la forme d'une broche de traction.

12. Dispositif de serrage selon l'une quelconque des revendications 1 à 10, **caractérisé en ce que** le dispositif de manoeuvre (3) est réalisé sous forme de dispositif hydraulique.

13. Dispositif de serrage selon l'une quelconque des revendications précédentes, **caractérisé en ce que** les cales de serrage (2, 2') sont fixées de manière interchangeable sur les plateaux de serrage (1).

14. Dispositif de serrage selon l'une quelconque des revendications précédentes, **caractérisé en ce qu'**il est prévu une bague d'écartement (8), qui est formée par au moins trois segments (81, 82, 83) et dont la surface périphérique extérieure comporte un étrier de pression (85) périphérique.

15. Dispositif de serrage selon la revendication 14, **caractérisé en ce que** la bague d'écartement (8) comporte des chanfreins (86) sur sa surface périphérique intérieure.

16. Dispositif de serrage selon la revendication 15, **caractérisé en ce que** les plateaux de serrage (1), sur leur bord destiné à coopérer avec les cales de serrage, comportent un chanfrein (10) dont l'angle γ coïncide de préférence avec celui des chanfreins (86).

17. Dispositif de serrage selon la revendication 16, **caractérisé en ce que** l'angle γ est plus petit que l'angle de la surface inclinée du fond (16) des rainures de guidage (12).

18. Ensemble de dispositif de serrage pour aligner et serrer deux extrémités de tube de tailles différentes, comportant des plateaux de serrage (1), qui sont disposés à distance axiale l'un de l'autre, des cales de serrage (2) orientées dans la direction axiale, qui sont montées avec un premier côté (21, 23) sur les plateaux de serrage (1) de manière mobile dans la direction radiale et comportent, sur un deuxième côté (22), une surface de contact destinée à agir sur les extrémités de tube (91, 92), un guidage (4) destiné à guider les cales de serrage (2) sur les plateaux de serrage (1) et un dispositif de manoeuvre (3) destiné à déplacer les cales de serrage (2), **caractérisé en ce que** le guidage (4) destiné à guider les cales de serrage (2) sur les plateaux de serrage (1) est réalisé en forme de rainures de guidage (12), le fond (16) des rainures de guidage (12) formant une surface inclinée, et **en ce que** le guidage (4) est muni d'un dispositif de fixation élastique destiné à maintenir les cales de serrage (2) sur les plateaux de serrage (1), les cales de serrage (2) étant interchangeables et plusieurs jeux de cales de serrage (2, 2') avec des distances différentes entre le côté intérieur et le côté extérieur (21, 22) étant prévus.

19. Ensemble de dispositif de serrage selon la revendication 18, **caractérisé en ce que** les cales de serrage (2) sont réalisées en plusieurs parties avec un élément coulissant (27) du côté des plateaux de serrage et un élément de recouvrement (28) du côté des tubes, l'élément de recouvrement (28) étant interchangeable et un jeu d'éléments de recouvrement (28) de tailles différentes étant prévu.
